# EUROPEAN PATENT APPLICATION

(11) **EP 4 451 719 A1**
(43) Date of publication of application: **23.10.2024**
(21) Application number: 24170686.0
(22) Date of filing: 17.04.2024
(51) Int. Cl.: H04W 8/20, H04W 60/04, H04W 48/18

(54) **CONNECTION MANAGEMENT**

(30) Priority: 19.04.2023 FI 20235436
(71) Applicant: Telia Company AB, 169 94 Solna (SE)
(72) Inventor: JALKANEN, Tero, 04300 Tuusula (FI); SARAJISTO, Tomi, 00790 Helsinki (FI)
(74) Representative: Berggren Oy

(57) **Abstract**

A method for a network-controlled management of a subscription applied by a terminal device (110) is provided, the method comprises: generating (210) a signal to a network management entity (MME A, MME B) of a first mobile communication network (MNA, MNB) to cause a generation of a network initiated attach request to the terminal device (110); establishing (230), in response to the receipt (220) of the signal from the terminal device (110), a communication channel on a user plane with the terminal device (110), transmitting (240) data to the terminal device (110), the data comprising at least part of a definition of a subscription in order to re-provisioning of the subscription to cause an attachment to a second mobile communication network (MNA, MNB). An apparatus (ME) and a computer program are also provided to.

## Description

### TECHNICAL FIELD

The invention concerns in general the technical field of telecommunications. More particularly, the invention concerns a management of a communication connection of a terminal device.

### BACKGROUND

The mobile communications networks are serving a vast number of terminal devices having been configured to perform various tasks in their location. Especially, the development in the Internet of Things domain has brought a variety of terminal devices to the mobile communication networks which terminal devices operate e.g. as sensors, alarms, trackers, locks and so on and communicate with servers and similar residing in the network side.

There are various situations in which the terminal devices may require a management in various manner. Such a management may relate to various operations, such as to a software update, a configuration modification, a status check, a subscription (re)provisioning, and so on. However, at least some of these actions are difficult to implement because the terminal devices, cf. IoT devices, may reside behind many obstacles, such as are positioned in a specific (virtual) private network and/or behind a firewall and a Network Address Translation (NAT), for example. Thus, it may turn out to be impossible to reach the respective terminal devices directly from the network side.

There are introduced several approaches by means of which the terminal devices may be reached even if they reside so in the communication network that they are difficult to reach. First known approach is that the terminal device, with the subscription residing in the terminal device, is arranged to poll a management server dedicated for the terminal device on a regular basis under a predefined scheme and since the connection is initiated from the terminal device, the management server may reach the terminal device by responding to the triggering signal from the terminal device. Another known approach is based on using short message service of the mobile communications networks for requesting the terminal device to initiate a connection towards the management server.

The known solutions are operable as such, but they also have disadvantages. Namely, many times it is enough for the terminal devices especially in the loT domain that they support data connection and no other connection types, such as the short message service, is needed. Besides, even if the short message technology is a simple mechanism as such, it requires modification in the terminal device, this increases cost of the devices, which is not desirable especially in the IoT context wherein many terminal devices perform only very simple operation, such as measuring a parameter, and the cost of the device plays an important role. Another disadvantage especially in relation to the polling approach is that the polling increases battery consumption and it may at least in some application areas be a major drawback because the loT device may be planned to be operative in terms of battery capacity many years or even a decade. Therefore, any unnecessary communication shall be avoided whenever possible.

Therefore, there is a need to introduce novel approaches to manage a connection establishment especially for subscriber identity provisioning.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, an apparatus, and a computer program for a network-controlled management of a subscription.

The objects of the invention are reached by a method, an apparatus, and a computer program as defined by the respective independent claims.

According to a first aspect, a method for a network-controlled management of a subscription applied by a terminal device is provided, the method, performed by a management entity, comprises:
generating a signal to a network management entity of a first mobile communication network serving the terminal device based on a subscription applied by the terminal device, the signal comprising data indicative to the network management entity to cause a generation of a network initiated attach request to the terminal device,
receiving, upon a completion of an attachment to the first mobile communication network by the terminal device, a signal from the terminal device,
establishing, in response to the receipt of the signal from the terminal device, a communication channel on a user plane with the terminal device,
transmitting data to the terminal device, the data comprising at least part of a definition of a subscription requested to be applied by the terminal device in order to re-provisioning of the subscription applied by the terminal device to cause an attachment to a second mobile communication network.

The signal to the network management entity of the first mobile communication network may be delivered from the management entity over at least one of: Service Capability Exposure Function, SCEF; Network Exposure Function, NEF.

Furthermore, data identifying at least one entity in a communication channel to reach the management entity by the terminal device may be delivered to the terminal device. The data identifying the at least one entity in the communication channel may e.g. comprise a definition for at least one of: an access point name of the management entity from the first mobile communication network, a data network name of the management entity from the first mobile communication network. For example, the data identifying the at least one entity in the communication channel may be delivered in one of: the signal to a network management entity of the first mobile communication network; a dedicated signal after the generation of the signal to the network management entity of the first mobile communication network.

Still further, the data comprising at least part of a definition of a subscription may correspond to a digitally implemented embedded subscriber identity module.

According to a second aspect, an apparatus for a network-controlled management of a subscription applied by a terminal device, the apparatus is configured to:
generate a signal to a network management entity of a first mobile communication network serving the terminal device based on a subscription applied by the terminal device, the signal comprising data indicative to the network management entity to cause a generation of a network initiated attach request to the terminal device,
receive, upon a completion of an attachment to the first mobile communication network by the terminal device, a signal from the terminal device,
establish, in response to the receipt of the signal from the terminal device, a communication channel on a user plane with the terminal device,
transmit data to the terminal device, the data comprising at least part of a definition of a subscription requested to be applied by the terminal device in order to re-provisioning of the subscription applied by the terminal device to cause an attachment to a second mobile communication network.

The apparatus may be configured to deliver the signal to the network management entity of the first mobile communication network over at least one of: Service Capability Exposure Function, SCEF; Network Exposure Function, NEF.

Furthermore, the apparatus may be configured to deliver data identifying at least one entity in a communication channel to reach the apparatus by the terminal device to the terminal device. The data identifying the at least one entity in the communication channel may comprise a definition for at least one of: an access point name of the management entity from the first mobile communication network, a data network name of the management entity from the first mobile communication network. For example, the apparatus may be configured to deliver the data identifying the at least one entity in the communication channel in one of: the signal to a network management entity of the first mobile communication network; a dedicated signal after the generation of the signal to the network management entity of the first mobile communication network.

Still further, the data comprising at least part of a definition of a subscription may correspond to a digitally implemented embedded subscriber identity module.

According to a third aspect, a computer program is provided, the computer program comprising instructions to cause the apparatus according to the second aspect as defined above to execute the steps of the method according to the first aspect as defined above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figure 2 illustrates schematically a method according to an example.
Figure 3 illustrates schematically an apparatus according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

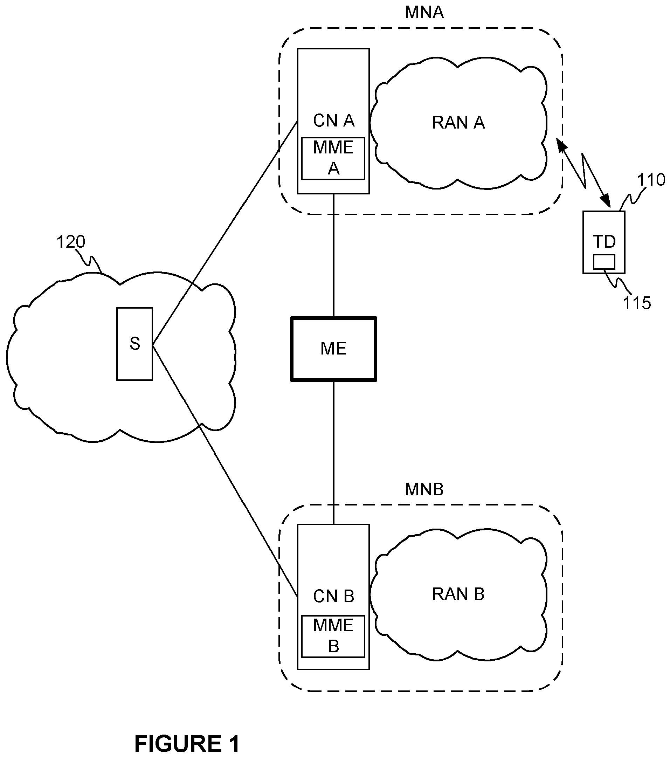

Figure 1 illustrates schematically an example of a communication environment into which the present invention is implementable in a manner as is described in the forthcoming description. The starting point is that a terminal device 110 being an IoT device is served by a first mobile communication network MNA. The terminal device 110 is provided with a subscription 115 by means of which it may access the first mobile communication network MNA. The subscription herein refers to an embedded subscriber identity module digitally implemented to the terminal device 110 without a physical SIM card. In other words, it is a software implementation stored in a memory of the terminal device 110 which is utilized by the terminal device 110 in using the services of the first mobile communication network MNA.

There is also at least one other mobile communication network, referred as a second mobile communication network MNB, which provides communication services in the area the terminal device 110 resides. However, the terminal device 110 is required to be provisioned in such a manner that it may access the second mobile communication network MNB.

Both mobile communication networks MNA, MNB comprise their own core networks CN A, CN B and radio access networks RAN A, RAN B as is known from prior art. The core network CN A, CN B side comprises a network management entity, such as a Mobility Management Entity MME, and other entities, such as registers storing data relating to subscribers and their locations, for example. Correspondingly, the radio access network RAN A, RAN B comprises base stations and other entities in order to implement wireless communication with the terminal devices 110. Thus, the mobile communication networks MNA, MNB comprise known entities in order to implement one or more radio communication technologies in the respective networks in order to provide communication service for the terminal device 110.

Moreover, the mobile communication networks MNA, MNB are provided with a communication channel to a data network 120, such as to the Internet, wherein a number of server devices are arranged to operate. The server devices comprise at least one server device S which is configured to provide service to the terminal device 110 which is an IoT device. For example, if the terminal device 110 is a sensor it may be configured to transmit measurement data to the server device S, but the invention is not limited only to such kind of application area.

In accordance with the present invention a management entity ME is introduced wherein the management entity ME is at least responsible for participating to a management of an operation of the terminal device 110 in a manner described in the forthcoming description. The management entity may be controlled by a party managing the operation of the terminal device 110 and the corresponding server device S, i.e. the party may be considered as a IoT service provider. In accordance with at least some aspects of the invention the management entity ME is used for managing subscriptions 115 in the terminal devices 110 and to cause a change the subscription 115 in the respective terminal device 110 in a manner as described in the forthcoming description. The operation to the change the applied subscription 115 in the terminal device 110 may be called as provisioning, or re-provisioning, of the subscription 115. The management entity ME may be provided with a communication connection with a plurality of mobile communication networks MNA, MNB and especially with respective core networks CN A, CN B therein. The communication connection may e.g. be implemented between the management entity ME and the network management entities MME A, MME B in the mobile communications networks MNA, MNB, or other entities therein. The communication between the management entity ME and the core networks CN A, CN B may be implemented e.g. through an applicable interfacing entity, such as Service Capability Exposure Function (SCEF) / Network Exposure Function (NEF) as non-limiting examples. Furthermore, the communication between the mentioned entities is preferably arranged over control plane signaling. This increases a security and a reliability of the communication e.g. compared to a communication over user plane.

The management entity ME shall be understood as a device, or a plurality of devices, configured to perform as is described in the description herein. As a result the management entity ME executes a management function with respect to the one or more terminal devices 110, and subscriptions 115. The management entity ME may be a standalone device communicatively connected to the other entities or it may be implemented with a cooperation of multiple devices and/or even as a management network, or even associated or integrated to another entity, such as one of the network management entities MME A, MME B.

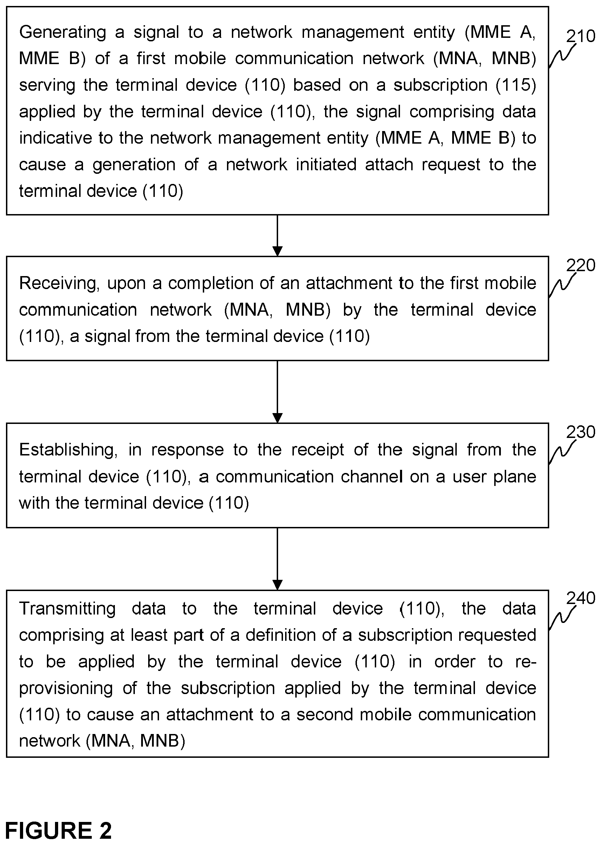

Next, an example of a method according to the present invention is described by referring to Figure 2. Figure 2 illustrates the method from the management entity ME point of view. The method relates to a network-controlled management of a subscription applied by a terminal device 110 wherein the terminal device 110 is an IoT device. The aim of the method is to achieve a re-provisioning of the subscription 115 in the terminal device 110 in order to cause the terminal device 110 to be served by another mobile communication network MNA, MNB than the one currently serving the terminal device 110. As a non-limiting example, the reason for changing the serving mobile communication network MNA, MNB for the terminal device 110 may e.g. be that the target network provides more comprehensive support in the RAN side, such as some specific technical features, like so called Extended Discontinuous Reception in order to reduce power consumption.

First, the management entity ME is configured to generate 210 a signal to a network management entity MME A, MME B of a first mobile communication network MNA, MNB serving the terminal device 110 based on a subscription 115 applied by the terminal device 110. In other words, data stored in the subscription and applied defines the mobile communication network MNA, MNB that serves the subscription in question and to which the signal is generated 210. At some point, the management entity ME decides that the subscription applied by the terminal device 110 shall be re-provisioned and initiates a procedure to achieve that. Since the terminal device 110 may not be active or that the re-provisioning is needed within a predefined period of time, such as immediately, the management entity ME is arranged to perform the generation 210 of the signal wherein the signal comprises data indicative to the network management entity MME A, MME B of the first mobile communication network MNA, MNB to cause a generation of a network initiated attach request to the terminal device 110. Thus, the management entity ME instructs the management entity MME A, MMEB of the first mobile communication network MNA, MNB to perform so that it generates a signal that causes the terminal device 110 to initiate an attach procedure towards the first mobile communication network MNA, MNB.

In accordance with an embodiment the signal to the network management entity MME A, MME B of the first mobile communication network MNA, MNB may be delivered from the management entity ME over a specific interface referring e.g. to one or more network nodes. For example, the signal may be delivered over a Service Capability Exposure Function (SCEF) or a Network Exposure Function (NEF) which allow an access to the core network of the first mobile communication network MNA, MNB, and, thus, enables an access to the respective network management entity MME A, MME B in an efficient manner.

In response to the receipt of the signal the network management entity MME A, MME B, such as the mobility management entity of 4G/5G network, residing in the respective core network CN A, CN B initiates a process to cause an initiation of an attach procedure by the terminal device 110. During the attach procedure related sub-operations are performed, such as a location update process as well as other preparations in the core network for the attachment. In response to a completion of the attach procedure the responsible network management entity MME A, MME B of the first mobile communication network MNA, MNB is arranged to generate an Attach Accept message to the terminal device 110. The message may be sent on a signaling plane e.g. with Non Access Stratum (NAS) signaling.

In accordance with the present invention the terminal device 110 is arranged to generate a signal to the management entity ME upon the attach procedure to the first mobile communication network MNA, MNB is completed which is then received 220 by the management entity ME. In order to perform this the terminal device 110 is provided with data identifying at least one entity in a communication channel to reach the management entity ME by the terminal device 110. Such data may e.g. define an interface, or similar, to reach the management entity ME. Thus, the data identifying the at least one entity in the communication channel may comprise a definition for at least one of: an access point name APN of the management entity ME from the first mobile communication network MNA, MNB; or a data network name DNN of the management entity ME from the first mobile communication network MNA, MNB. For example, the data identifying the at least one entity in the communication channel may be delivered from the management entity ME in one of: in the signal to a network management entity MME A, MME B of the first mobile communication network MNA, MNB; in a dedicated signal after the generation of the signal to the network management entity MME A, MME B of the first mobile communication network MNA, MNB. In response to the receipt of the data the network management entity MME A, MME B may include the data to a signal to the terminal device 110, e.g. by including it to signaling during the attach procedure or by generating a specific signal carrying the data to the terminal device 110. Thus, the signaling causes that the terminal device 110 does not access to the normal access point name APM in a data network defined in the terminal device 110, but replaces the information with the received data so as to cause a communication towards the management entity ME through the respective network node, or entity, in the communication channel to reach the management entity ME.

In response to an execution at least some above-described operations the terminal device 110 may generate a signal towards the management entity ME in order to establish 230 a communication channel on a user plane with the terminal device 110. The management entity ME receives the signal and in response to it transmits 240 data to the terminal device 110. The transmitted data comprises at least part of a definition of a subscription requested to be applied by the terminal device 110 in order to re-provisioning of the subscription applied by the terminal device 110 to cause an attachment to a second mobile communication network MNA, MNB. Thus, the management entity ME may receive data identifying the terminal device 110 and based on that inquire internally data to be transmitted to the terminal device 110. The data may comprise data defining, at least in part, a subscription 115 requested the terminal device 110 to apply. In case the terminal device 110 is arranged to store a plurality of subscriptions, i.e. the data defining the subscriptions, the data comprising at least part of the definition of the subscription may carry an identifier of the subscription that shall be applied to. Alternatively, the data may carry a full definition of the subscription to be applied, i.e. the data defining the new subscription 115. In such a case the data comprising at least part of a definition of a subscription 115 may be considered to correspond to a digitally implemented embedded subscriber identity module, i.e. a software-implemented subscriber identity module.

In response to the receipt of the data the terminal device 110 initiates a re-provisioning of the subscription based on the new definition of the subscription 115 to be applied to. The re-provisioning causes the terminal device 110 to de-attach from the first mobile communication network MNA, MNB and execute an attach procedure towards the second mobile communication network MNA, MNB defined by the subscription 115 to be applied to. As a result, the terminal device 110 being the IoT device is changed to be served by another mobile communication network MNA, MNB instead of the first mobile communication network MNA, MNB.

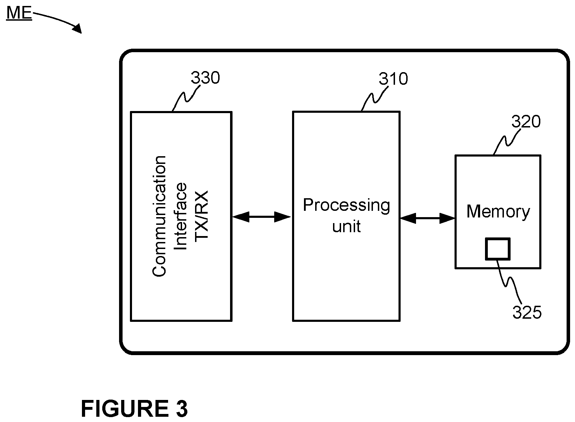

In the description herein it is referred to the management entity ME configured to perform various operations as described. The management entity may be implemented with one or more apparatuses suitable for practicing the embodiments as described. A non-limiting example of suitable apparatus is schematically illustrated in Figure 3. In other words, the apparatus may be configured to implement at least part of the method as described. The execution of the respective method, or at least some portions of it, may be achieved by arranging a processing unit 310 comprising at least one processor to execute at least some portion of computer program code 325 stored in at least one memory 320 causing the processor 310, and, thus, the apparatus to implement the method steps as described in order to execute the function as described. In other words, the processing unit 310 may be arranged to access the memory 320 and to retrieve and to store any information therefrom and thereto. Moreover, the processing unit 310 may be configured to control a communication through one or more communication interfaces 330 for accessing the other entities being involved in the operation, such as the network management entities MME A, MME B and similar, such as data storages if any. Hence, the communication interface 330 may be arranged to implement, possibly under control of the processing unit 310, a number of communication protocols, such as an IP or any other communication protocol, for communicating with one or more entities to receive input and to output data as described. The term communication interface 330 shall be understood in a broad manner comprising necessary hardware and software elements for implementing the communication techniques. Further, the apparatus in question may comprise one or more input/output devices for inputting and outputting information. As non-limiting examples, such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 310 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 320, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product according to at least some embodiments of the invention which, when executed by at least one processor, cause an apparatus to perform at least some portions of the method as described. For example, the computer program product may comprise at least one computer-readable non-transitory medium having the computer program code 325 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 325 may comprise a proprietary application, such as computer program code for managing a subscription in the manner as described herein.

The invention may also be considered as a system in which the management entity ME is configured to perform the method together with the other entities belonging to the mobile communication networks MNA, MNB but also with the terminal device 110 and the subscription 115 therein.

The present invention enables a management of the subscription residing in a terminal device being an IoT device so that re-arrangement of the service provision to the subscription may be achieved as described. The invention provides an efficient way to re-provisioning of the subscription of the terminal device.

The specific examples provided in the description given above should not be construed as limiting the applicability and/or the interpretation of the appended claims. Lists and groups of examples provided in the description given above are not exhaustive unless otherwise explicitly stated.

## Claims

1. A method for a network-controlled management of a subscription applied by a terminal device (110), the method, performed by a management entity (ME), comprises:
generating (210) a signal to a network management entity (MME A, MME B) of a first mobile communication network (MNA, MNB) serving the terminal device (110) based on a subscription (115) applied by the terminal device (110),
the signal comprising data indicative to the network management entity (MME A, MME B) to cause a generation of a network initiated attach request to the terminal device (110),
receiving (220), upon a completion of an attachment to the first mobile communication network (MNA, MNB) by the terminal device (110), a signal from the terminal device (110),
establishing (230), in response to the receipt of the signal from the terminal device (110), a communication channel on a user plane with the terminal device (110),
transmitting (240) data to the terminal device (110), the data comprising at least part of a definition of a subscription requested to be applied by the terminal device (110) in order to re-provisioning of the subscription applied by the terminal device (110) to cause an attachment to a second mobile communication network (MNA, MNB).

2. The method according to claim 1, wherein the signal to the network management entity (MME A, MME B) of the first mobile communication network (MNA, MNB) is delivered from the management entity (ME) over at least one of: Service Capability Exposure Function (SCEF), Network Exposure Function (NEF).

3. The method according to any of preceding claims, wherein data identifying at least one entity in a communication channel to reach the management entity (ME) by the terminal device (110) is delivered to the terminal device (110).

4. The method according to claim 3, wherein the data identifying the at least one entity in the communication channel comprises a definition for at least one of: an access point name of the management entity (ME) from the first mobile communication network (MNA, MNB), a data network name of the management entity (ME) from the first mobile communication network (MNA, MNB).

5. The method according to claim 3 or claim 4, wherein the data identifying the at least one entity in the communication channel is delivered in one of: the signal to a network management entity (MME A, MME B) of the first mobile communication network (MNA, MNB); a dedicated signal after the generation of the signal to the network management entity (MME A, MME B) of the first mobile communication network (MNA, MNB).

6. The method according to any of preceding claims, wherein the data comprising at least part of a definition of a subscription (115) corresponds to a digitally implemented embedded subscriber identity module.

7. An apparatus (ME) for a network-controlled management of a subscription applied by a terminal device (110), the apparatus (ME) is configured to:
generate (210) a signal to a network management entity (MME A, MME B) of a first mobile communication network (MNA, MNB) serving the terminal device (110) based on a subscription (115) applied by the terminal device (110), the signal comprising data indicative to the network management entity (MME A, MME B) to cause a generation of a network initiated attach request to the terminal device (110),
receive (220), upon a completion of an attachment to the first mobile communication network (MNA, MNB) by the terminal device (110), a signal from the terminal device (110),
establish (230), in response to the receipt of the signal from the terminal device (110), a communication channel on a user plane with the terminal device (110),
transmit (240) data to the terminal device (110), the data comprising at least part of a definition of a subscription requested to be applied by the terminal device (110) in order to re-provisioning of the subscription applied by the terminal device (110) to cause an attachment to a second mobile communication network (MNA, MNB).

8. The apparatus (ME) according to claim 7, wherein the apparatus (ME) is configured to deliver the signal to the network management entity (MME A, MME B) of the first mobile communication network (MNA, MNB) over at least one of: Service Capability Exposure Function (SCEF), Network Exposure Function (NEF).

9. The apparatus (ME) according to claim 7 or claim 8, wherein the apparatus (ME) is configured to deliver data identifying at least one entity in a communication channel to reach the apparatus (ME) by the terminal device (110) to the terminal device (110).

10. The apparatus (ME) according to claim 9, wherein the data identifying the at least one entity in the communication channel comprises a definition for at least one of: an access point name of the management entity (ME) from the first mobile communication network (MNA, MNB), a data network name of the management entity (ME) from the first mobile communication network (MNA, MNB).

11. The apparatus (ME) according to claim 9 or claim 10, wherein the apparatus (ME) is configured to deliver the data identifying the at least one entity in the communication channel in one of: the signal to a network management entity (MME A, MME B) of the first mobile communication network (MNA, MNB); a dedicated signal after the generation of the signal to the network management entity (MME A, MME B) of the first mobile communication network (MNA, MNB).

12. The apparatus (ME) according to any of preceding claims 7 to 11, wherein the data comprising at least part of a definition of a subscription (115) corresponds to a digitally implemented embedded subscriber identity module.

13. A computer program comprising instructions to cause the apparatus (ME) of claim 7 to execute the steps of the method according to any of claims 1 to 6.
